# EUROPEAN PATENT APPLICATION

(11) **EP 4 525 231 A1**
(43) Date of publication of application: **19.03.2025**
(21) Application number: 23382937.3
(22) Date of filing: 15.09.2023
(51) Int. Cl.: H02G 3/08, H02G 3/10

(54) **MODULAR SURFACE-MOUNTED BOX SYSTEM FOR ELECTRICAL MECHANISMS**

(71) Applicant: Schneider Electric España, S.A., 08019 Barcelona (ES)
(72) Inventor: GONZÁLEZ IRIBAS, AITOR, 31100 PUENTE LA REINA (ES); LARREA FERNANDEZ DE LA PEÑA, AIZEA, 31100 PUENTE LA REINA (ES)
(74) Representative: Plasseraud IP

(57) **Abstract**

The present invention relates to a modular surface-mounted box system for electrical mechanisms comprising at least one support box (2) to house electrical mechanisms (5), a frame (6) capable of being fastened to the box (2) where the electrical mechanism (5) is housed, and an outer aesthetic cover, wherein the support box (2) comprising guiding means on the outside of the side walls thereof that allow another adjacent box (2) to be slidably coupled, and wherein the outer aesthetic cover comprises independent side covers (3) that can fit into the guiding means of the side walls of the box (2) and a front cover (4) for each box (2) made up of a single "U"-shaped piece with guiding means inside the side walls (41) thereof that correspond to coupling means of the box (2) for slidably coupling, the side covers (3) and the front cover (4) forming the outer aesthetic cover of the system.

## Description

### Technical field

The present invention relates to surface-mounted boxes for electrical mechanisms, provided with a base box that fastens to the wall, a frame capable of being fastened to said box in which the electrical mechanism is fastened, and an aesthetic outer casing couplable to said box. More specifically, it relates to a system of several boxes arranged in series for the inclusion of a plurality of electrical mechanisms.

### State of the art

Surface-mounted boxes for housing electrical mechanisms such as those intended, for example, for sockets, are known in the state of the art. These surface-mounted boxes usually have a predefined size to house one or more electrical mechanisms. Generally, in the design thereof, they are made up of a support box for directly fastening to a surface, being housed in said electrical mechanism, and which is fastened on a frame that is in turn fastened to the support box, to subsequently close the assembly concealing the rest of the elements with an aesthetic cover that provides the outer appearance of the product.

Boxes of this type, unlike recessed boxes, are called surface-mounted boxes because they are fastened directly on the installation surface, either for aesthetic reasons or installation requirements, such as in the case of fastening on conduits or for watertightness issues.

However, for boxes of this type, as mentioned above, are conventionally predefined based on the number of mechanisms to be placed, such that a single box can house, for example, three electrical mechanisms, but it would not be able to be expanded to a fourth. The disadvantage of this configuration is that if it is necessary to add or remove a mechanism at the time of installation, the correct box must be available, and it does not allow replacement in case of malfunction or deterioration.

In order to solve these problems, document ES1078264U discloses a surface-mounted box for electrical mechanisms with a modular box configuration, such that several boxes can be connected depending on the number of electrical mechanisms necessary, and the boxes having suitable means for the connection therebetween. However, in surface-mounted boxes of this type, an outer aesthetic cover is necessary that is predefined depending on the number of boxes, a single piece covering the assembly concealing the boxes therein. Since this outer part is common, it is difficult to increase or decrease the number of modules.

Another disadvantage of these conventional surface-mounted modular systems is that, by having a predetermined outer part of the box itself, in the event of breakage or damage to the outer part, the entire box must be changed.

Therefore, a new modular surface-mounted box system is proposed capable of allowing the placement of as many devices as necessary, with completely modular pieces and guaranteeing the correct alignment of the wired devices.

### Object of the invention

In order to solve the technical problems discussed so far, in addition to providing additional advantages that can be derived later, the present invention relates to a modular surface-mounted box system for electrical mechanisms comprising at least one support box to house electrical mechanisms, a frame capable of being fastened to the box where the electrical mechanism is housed, and an outer aesthetic cover, wherein the support box comprises guiding means on the outside of the side walls thereof that allow another adjacent box to be slidably coupled, and in that the outer aesthetic cover comprises independent side covers that can fit into the guiding means of the side walls of the box and a front cover for each box made up of a single U-shaped piece with guiding means inside the side walls thereof that correspond to coupling means of the box for slidably coupling, the side covers and the front cover as an assembly forming the outer aesthetic cover of the system.

This configuration makes it possible to generate a modular box system, allowing an unlimited number of boxes to be placed, guaranteeing correct functionality, device alignment, and uniform aesthetic appearance.

In addition, it provides greater ease of assembly such that once the support box is fastenable to the wall or channel, the rest of the elements are easily fastenable and couplable. Once the desired number of support boxes has been fastened by coupling them together by means of sliding perpendicular to the fastening surface due to the guiding means thereof, it is subsequently possible to fasten a frame, in each box, in which the corresponding electrical mechanism is fastened, to subsequently couple the side covers also by sliding, and a front cover for each box used. This means that externally an impression of a continuous outer cover is given, in turn allowing a greater or lesser number of mechanisms to be coupled and facilitating the individual replacement of each module, without the need for a block of boxes or an outer aesthetic cover block depending on requirements.

This system offers a large number of advantages over conventional systems since in addition to achieving easy installation, it solves the problem of needing to change the entire box if the outer part suffers any damage, affecting the aesthetics of the installation.

In addition, it allows customization by allowing the change of covers in an easy and simple manner without the need for fastening means such as screws or adhesives. The number of modules can be modified, it even being possible to place electrical mechanisms for different functions, coupling the desired number of boxes and removing the necessary side covers.

According to a feature of the invention, the guiding means that enable another adjacent box to be slidably coupled are at least one upper tab and one lower tab that projects in an "L" shape on a side wall of the box corresponding with complementary tabs of the other side wall of the box, and corresponding with a coupling tab of the inside of the side covers.

This configuration ensures correct guidance that prevents it from being released and enables its coupling by adjustment. The number of tabs may vary depending on the requirements, preferably a pair of upper tabs and a pair of lower tabs on each side of the box, such that two rails are formed that ensure correct coupling between boxes and with the side covers.

Side is understood as the left and right walls of the box in the operational position in which said box is arranged on a vertical wall. Likewise, upper and lower are understood to be the arrangement in the vertical direction.

According to another feature of the invention, the guiding means inside the side walls of the front cover are at least one tab that projects in an "L" shape at the end of the side wall, corresponding with a tab complementary to the box. Similar to the slidable coupling configuration of the side covers, the front cover has tabs with the same characteristics that enable the slidable coupling.

According to another aspect of the invention, to ensure the fastening of the side covers to the box, the system comprises fastening means for fastening the side covers to the side walls of the box by snap-fit once coupled by means of the guide means of the box. This means that the side covers will be secured in their mounting position after coupling to the box by clipping.

Preferably, said fastening means for fastening the side walls are a recess in the side walls of the box corresponding with a fastening projection on the inner surface of the side cover for snap-fit fastening thereof.

Additionally according to the invention, the system comprises means for fixing the front cover to the box by snap-fit once coupled by means of the coupling means of the box.

Preferably the means for fastening the front cover to the box are a projection at the end of the inner surface of the side walls of the front cover corresponding with a projection of the box. In this way, once the end of the coupling guide between the front cover and the box is reached, the position is secured by fastening the front cover to the box by means of a snap-fit.

Additionally and preferably, to better secure the front cover, said cover comprises on the inner surface of its front wall a hooking projection corresponding with a hole in the frame for fastening between the front cover and frame once the front cover is coupled to the box.

Lastly and preferably, the frame has fastening means that enable it to be coupled to another frame that is arranged in an adjacent box, such that the boxes can be mutually coupled together with the frames without leaving a separation therebetween that could create a visible misalignment when arranging the outer cover.

### Description of the figures

To complement the description provided herein, and for the purpose of helping to make the features of the invention more readily understandable, said description is accompanied by a set of drawings constituting an integral part of the same, which by way of illustration and not limitation represents the following:
Figure 1 shows an exploded view of a module of the system made up of a support box, a frame, an electrical mechanism, two side covers and the front cover.
Figure 2 shows a perspective view of two boxes of the system in the mounting position thereof.
Figure 3 shows a perspective view of two boxes mounted together with the frame and mechanisms and with the side covers in the mounting position thereof.
Figure 4 shows a perspective view of the system with a section of the side of the box, at the time of assembly of the side covers.
Figure 5 shows a perspective view of two boxes together with the frame, mechanisms and side covers mounted, and with the front covers in the mounting position thereof.
Figure 6 shows a cross-sectional view wherein the guiding and fastening means between the box and the side cover can be seen.
Figure 7 shows a perspective view of the complete system once assembled for two mechanisms.

### Detailed description of the invention

In light of the aforementioned figures, and in accordance with the numbering adopted, an example of a preferred embodiment of the invention can be observed, which comprises the parts and elements indicated and described in detail below.

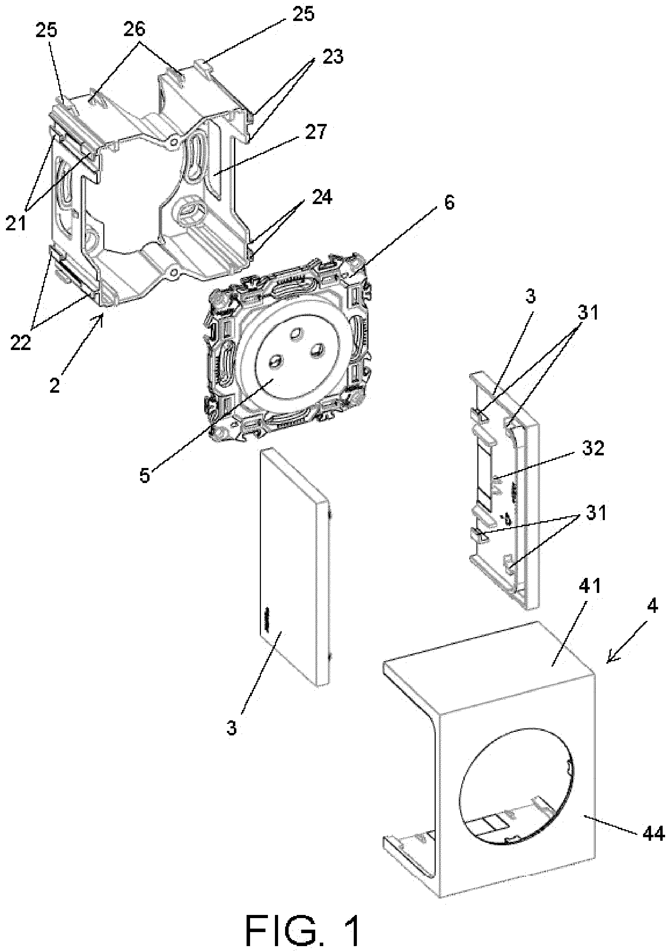

As can be seen in Figure 1, the modular system object of the invention consists, in its basic unit for a single electrical mechanism (5), of a support box (2), a frame (6), side covers ( 3) and a front cover (4).

The electrical mechanisms (5) can be standard power sockets, USB chargers, VGA connectors, Jack connectors, among others.

The modular box system (1) is designed to house electrical mechanisms of this type with various functionalities, to be installed on surfaces, without the need to make a chase.

Thus, for a basic unit like the one in Figure 1, first, the box (2) is fixed to the wall by screwing in the holes in the bottom of said box (2). Subsequently, once the box is fastened, the frame (6) is fastened to the box (2) in holes arranged on the outer surface thereof, in this case one hole arranged in the upper part and another in the lower part of the box (2) that correspond to the adjustment holes of the frame (6), as if it were a recessed box.

According to the description, upper, lower, side, bottom, outer surface, left and right are understood as the parts of the box (2) or positioning as the box (2) appears arranged in the examples shown in the figures.

Next, the electrical mechanism (5) is fastened to the frame (6), and then the aesthetic part of the assembly is arranged. The side covers (3) are coupled to the sides of the box (2), such that the left side cover (3) is attached to the box (2) by means of the guidance provided by the upper tab (21) and the lower tab (22), which project in an "L" shape corresponding with coupling tabs (31) complementary to the inner surface of the side cover (3). In the same way, the right side cover (3) is coupled using the tabs (23, 24) of the box (2).

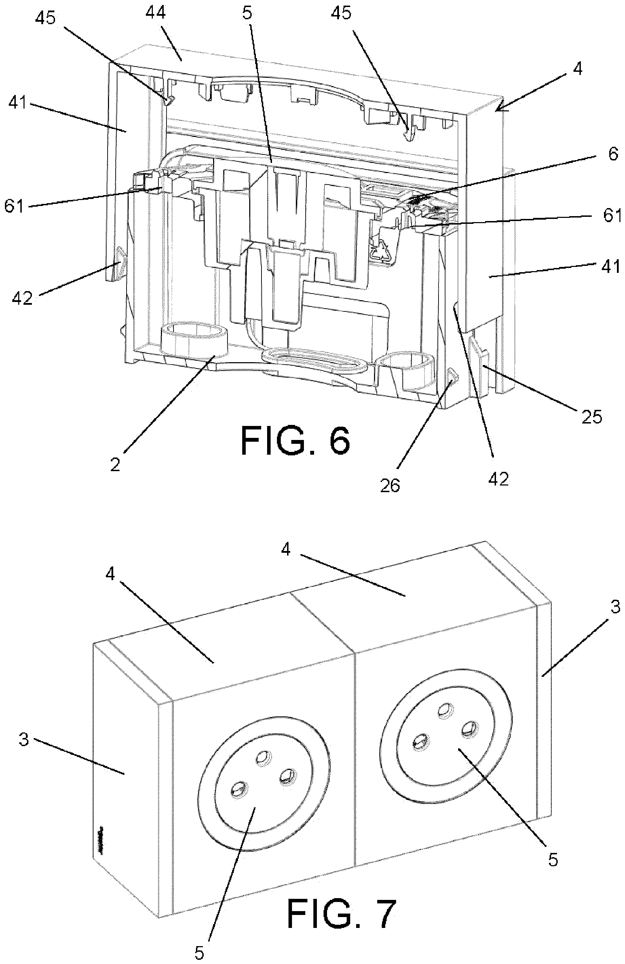

Lastly, to complete the aesthetic part, a front cover (4) is provided made up of a single "U"-shaped piece. This front cover (4) comprises guiding means inside the side walls (41) thereof in the form of an "L"-shaped tab (43) (figure 6), preferably in each corner of the side walls (41) of the front cover (4) and corresponding with complementary tabs (25) of the upper and lower part of the box (2).

In this way, the surface-mounted box (2) would be fully installed with its outer aesthetic cover.

However, if it were necessary to have a greater number of electrical mechanisms (5), it is possible to do so thanks to the configuration of the modular system object of the invention without the need to resort to pre-designed pieces for a specific number of mechanisms, but rather the same pieces as for a basic unit as described above would simply be used.

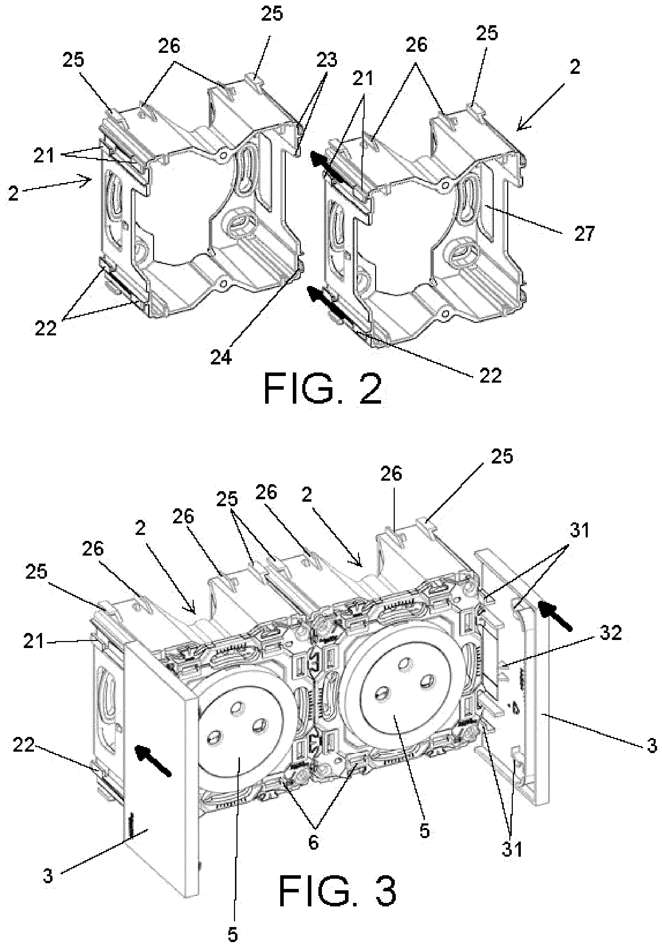

Thus, for the practical example shown in Figures 2 to 7, when two electrical mechanisms are to be installed, firstly, a support box (2) is fastened directly to the wall by screwing as explained above. Subsequently, a second box (2) is coupled by means of guiding such that the tabs (21, 22) on the left of the second box (2) are complemented by the tabs (23, 24) on the right of the first box (2), enabling the slidable coupling thereof as can be seen in Figure 2.

Said tabs with an "L" configuration provide a guide rail for the coupling. Once both boxes (2) are coupled, the second box (2) is fastened to the installation surface.

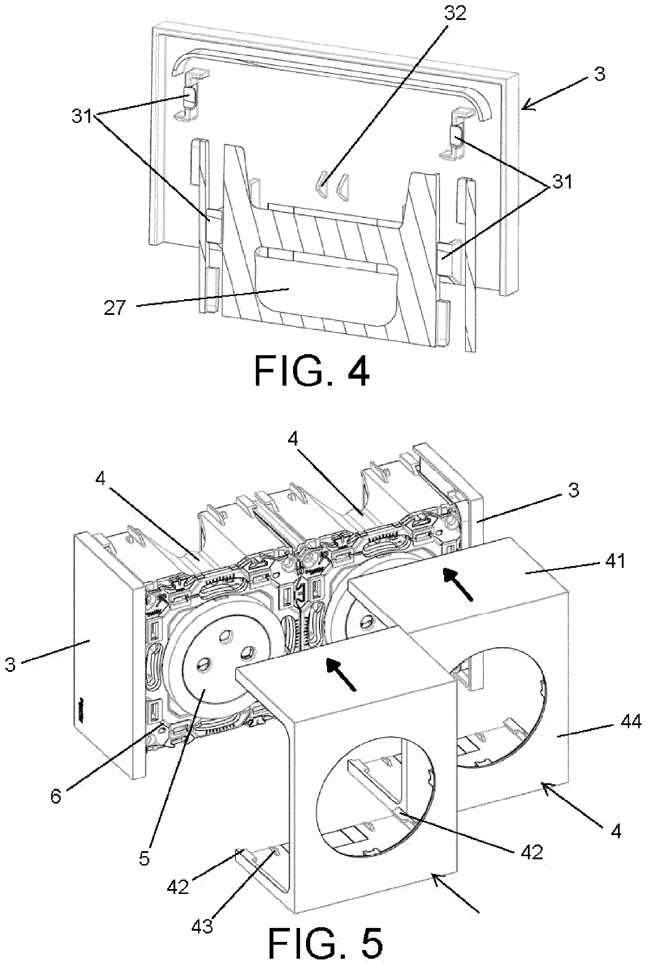

Next, a first frame (6) and a second frame (6) adjacent thereto are fastened, such that given the existing coupling between boxes (2), separation therebetween is prevented. Preferably, the frames will have a lateral tongue and groove for mutual coupling, as can be seen in Figures 3 and 5.

After fastening the electrical mechanisms (5) with the wiring thereof in the frames (6), as can be seen in Figure 3, the side covers (3) are slidably coupled as indicated by the arrows, by means of guiding as indicated in the embodiment of Figure 1.

Lastly, as can be seen in Figure 5, a front cover (4) is provided for each box (2), coupling the front cover (4) to the box (2) by guiding.

For some practical embodiments the coupling guided by its fit between tabs is sufficient for the fastening. However, according to other embodiments, to prevent the outer aesthetic cover from detaching, the side covers (3) (Figure 4) comprise at least one fastening projection (32) on the inner surface, preferably in the middle part, and corresponding with a recess (27) arranged in the side walls of the box (2). In this way, the side cover (3) is attached by clipping or snap-fit until the projection (32) fits into the recess (27), preventing its accidental release.

Likewise, to prevent the front cover (4) from being released as can be seen in Figure 6, the side walls (41) of the front cover (4) are coupled by guiding until a projection (42) arranged at the inner end of the side wall (41) snap-fits into a projection (26) of the box (2), which fastens the front cover (4) and prevents the movement thereof.

Additionally and preferably, to reinforce the fastening of the front cover (4), given that it may suffer greater stress when plugging and unplugging devices, the front cover (4) comprises, on the inner surface of the front wall (44) thereof, hooking projections (45) in the form of fastening pins in holes (61) of the frame (6) by snap-fit. In this way, all the pieces of the aesthetic cover are fastened, in a modular manner and without space between boxes (2) as can be seen in Figure 7, which provides a continuous aesthetic appearance just like the one that an outer aesthetic cover of a piece such as those of the state of the art may provide.

## Claims

1. A modular surface-mounted box system for electrical mechanisms comprising at least one support box (2) to house electrical mechanisms (5), a frame (6) capable of being fastened to the box (2) where the electrical mechanism (5) is housed, and an outer aesthetic cover, **characterised in that** the support box (2) comprising guiding means on the outside of the side walls thereof that allow another adjacent box (2) to be slidably coupled, and **in that** the outer aesthetic cover comprises independent side covers (3) that can fit into the guiding means of the side walls of the box (2) and a front cover (4) for each box (2) made up of a single "U"-shaped piece with guiding means inside the side walls (41) thereof that correspond to coupling means of the box (2) for slidably coupling, the side covers (3) and the front cover (4) forming the outer aesthetic cover of the system.

2. The modular surface-mounted box system according to claim 1, wherein the guiding means that enable another adjacent box (2) to be slidably coupled are at least one upper tab (21) and one lower tab (22) that projects in an "L" shape on a side wall of the box (2) corresponding with complementary tabs (23, 24) of the other side wall of the box (2), and corresponding with coupling tabs (31) of the inside of the side covers (3).

3. The modular surface-mounted box system according to any of the preceding claims, wherein the guiding means inside the side walls (41) of the front cover (4) are at least one tab (43) that projects in an "L" shape at the end of the side wall (41), corresponding with a complementary tab (25) of the box (2).

4. The modular surface-mounted box system according to any of the preceding claims, comprising fastening means for fastening the side covers (3) to the side walls of the box (2) by snap-fit once coupled by means of the guide means of the box (2).

5. The modular surface-mounted box system according to any of the preceding claims, wherein the fastening means for fastening the side covers (3) are a recess (27) in the side walls of the box (2) corresponding with a fastening projection (32) on the inner surface of the side cover (3) for snap-fit fastening thereof.

6. The modular surface-mounted box system according to any of the preceding claims, comprising fastening means for fastening the front cover (4) to the box (2) by snap-fit once coupled by means of the coupling means (25) of the box (2).

7. The modular surface-mounted box system according to the preceding claim, wherein the fastening means for fastening the front cover (4) to the box (2) are a projection (42) at the end of the inner surface of the side walls of the front cover (4) corresponding with a projection (26) of the box (2).

8. The modular surface-mounted box system according to any of the preceding claims, wherein the front cover (4) has, on the inner surface of the front wall (44) thereof, a hooking projection (45) corresponding with a hole (61) of the frame (6) for fastening between the front cover (4) and frame (6) once the front cover (4) is coupled to the box (2).

9. The modular surface-mounted box system according to any of the preceding claims, wherein the frame (6) has fastening means that enable it to be coupled to another frame (6) that is located in an adjacent box (2).

## Amended claims

### Amended claims in accordance with Rule 137(2) EPC.

1. A modular surface-mounted box system for electrical mechanisms comprising:
at least one support box (2) to house electrical mechanisms (5), the at least one support box (2) comprising four side walls defining in its operational position the left side wall, right side wall, upper side wall and the lower side wall,
a frame (6) capable of being fastened to the box (2) where the electrical mechanism (5) is housed, and
an outer aesthetic cover,
the support box (2) comprising guiding means on the outside of the two opposite left and right side walls of the box (2) that allow another adjacent box (2) to be slidably coupled,
**characterized in that** the outer aesthetic cover comprises independent side covers (3) that can fit into the guiding means of the two opposite left and right side walls of the box (2), and
a front cover (4) for each box (2) made up of a single "U"-shaped piece defined by a front wall (44) and two side walls (41) with guiding means (43) inside the side walls (41) that correspond to coupling means (25) of the box (2) on the outside of two opposite upper and lower side walls for slidably coupling,
the side covers (3) and the front cover (4) forming the outer aesthetic cover of the system.

2. The modular surface-mounted box system according to claim 1, wherein the guiding means that enable another adjacent box (2) to be slidably coupled are at least one upper tab (21) and one lower tab (22) that projects in an "L" shape on one of the opposite left and right side walls of the box (2) corresponding with complementary tabs (23, 24) of the opposite one of the side wall of the box (2), and corresponding with coupling tabs (31) of the inside of the side covers (3).

3. The modular surface-mounted box system according to any of the preceding claims, wherein the guiding means inside the side walls (41) of the front cover (4) are at least one tab (43) that projects in an "L" shape at the distal end of the side wall (41), corresponding with a complementary tab (25) of the box (2) on the two opposite upper and lower side walls.

4. The modular surface-mounted box system according to any of the preceding claims, comprising fastening means for fastening the side covers (3) to the left and right side walls of the box (2) by snap-fit once coupled by means of the guide means of the box (2).

5. The modular surface-mounted box system according to any of the preceding claims, wherein the fastening means for fastening the side covers (3) are a recess (27) in the left and right side walls of the box (2) corresponding with a fastening projection (32) on the inner surface of the side cover (3) for snap-fit fastening thereof.

6. The modular surface-mounted box system according to any of the preceding claims, comprising fastening means for fastening the front cover (4) to the box (2) by snap-fit once coupled by means of the coupling means (25) of the box (2).

7. The modular surface-mounted box system according to the preceding claim, wherein the fastening means for fastening the front cover (4) to the box (2) are a projection (42) at the distal end of the inner surface of the side walls (41) of the front cover (4) corresponding with a projection (26) of the box (2) on the two opposite upper and lower side walls.

8. The modular surface-mounted box system according to any of the preceding claims, wherein the front cover (4) has, on the inner surface of the front wall (44) thereof, a hooking projection (45) corresponding with a hole (61) of the frame (6) for fastening between the front cover (4) and frame (6) once the front cover (4) is coupled to the box (2).

9. The modular surface-mounted box system according to any of the preceding claims, wherein the frame (6) has fastening means that enable it to be coupled to another frame (6) that is located in an adjacent box (2).
